Europäisches Patentamt

European Patent Office

Office européen des brevets

(19)

(11) Veröffentlichungsnummer: **0 134 919**
**A2**

(12) # EUROPÄISCHE PATENTANMELDUNG

(21) Anmeldenummer: **84106750.7**

(22) Anmeldetag: **13.06.84**

(51) Int. Cl.⁴: **B 60 N 1/00**

(30) Priorität: **18.08.83 DE 3329865**

(43) Veröffentlichungstag der Anmeldung:
**27.03.85 Patentblatt 85/13**

(84) Benannte Vertragsstaaten:
**AT BE DE FR GB IT NL SE**

(71) Anmelder: **Karl Kässbohrer Fahrzeugwerke GmbH**
**Peter-Schmid-Strasse 13**
**D-7900 Ulm (Donau)(DE)**

(72) Erfinder: **Kauer, Kurt**
**Biberacher Strasse 12**
**D-7900 Ulm 10(DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath**
**Maximilianstrasse 58**
**D-8000 München 22(DE)**

(54) Klapptisch.

(57) Die Erfindung bezieht sich auf einen Klapptisch für Fahrzeugsessel, insbesondere Omnibussessel mit einem am Sessel angelenkten Gestell zum Positionieren des Tisches in einer Bereitschafts- bzw. einer Benutzungsstellung. Der vorliegenden Erfindung liegt die Aufgabe zugrunde, einen einfach aufgebauten und leicht zu bedienenden Klapptisch der eingangs genannten Art zu schaffen, der vom Vordersessel unabhängig ist. Diese Aufgabe wird erfindungsgemäß dadurch gelöst, daß das Gestell einen seitlich neben der Sitzfläche des Sessels angeordneten, in Benutzungsstellung vertikalen Ständer aufweist, der an seinem unteren und oberen Ende je ein Schwenkgelenk mit einer horizontalen, parallel zur Sitzflächenvorderkante ausgerichteten Achse umfaßt und dessen oberes Schwenkgelenk mit einem Klappgelenk verbunden ist, das eine in Benutzungsstellung horizontale, zu den Achsen der Schwenkgelenke rechtwinklige Klappachse aufweist und als Anlenkung für wenigstens ein Tischelement dient.

EP 0 134 919 A2

./...

Fig.1

# B E S C H R E I B U N G

Die Erfindung bezieht sich auf einen Klapptisch für Fahrzeugsessel, insbesondere Omnibussessel mit einem am Sessel angelenkten Gestell zum Positionieren des Tisches in einer Bereitschafts- bzw. einer Benutzungsstellung.

Aus der Praxis ist ein Klapptisch der eben genannten Art bekannt. Er befindet sich jeweils hinter der Rückenlehne des Fahrzeugsessels und kann lediglich von dem Benutzer des nachfolgenden Sessels verwendet werden.

Das Gestell hält das Tischelement an einander gegenüberliegenden Seiten der rechteckigen Tischfläche. In der Bereitschaftsstellung befindet sich das Tischelement an die Rückenlehne angeklappt. Zumeist ist es in einer Versenkung angeordnet.

In der Benutzungsstellung kann es mit Hilfe des Gestells in eine waagrechte Position ausgeklappt werden.

Der bekannte Klapptisch weist einige Nachteile auf. Bei Fahrzeugen sind die Sessel zumeist in verschiedenen Abständen zueinander anordbar, um den Passagierraum mit mehr oder weniger Sessel bestücken zu können. Der bekannte Klapptisch kann von dem Benutzer des nachfolgenden Sessels nur dann tatsächlich eingesetzt werden, wenn der Abstand zwischen den Sesseln nicht zu groß ist. Die Benutzung des Klapptisches wird auch dadurch beeinträchtigt, daß der Klapptisch,bedingt durch seine Koppelung mit dem davor befindlichen Sessel, jede Erschütterung des Sessels mitmacht.

In der ersten Sitzreihe, also hinter Einstiegen bzw. Einbauten wie Küchen, Toiletten usw. kann ein derartiger Klapptisch ohnehin nicht verwendet werden, weil dort die entsprechende Rückenlehne fehlt.

Der vorliegenden Erfindung liegt die Aufgabe zugrunde, einen einfach aufgebauten und leicht zu bedienenden Klapptisch der eingangs genannten Art zu schaffen, der vom Vordersessel unabhängig ist.

Diese Aufgabe wird erfindungsgemäß dadurch gelöst, daß das Gestell einen seitlich neben der Sitzfläche des Sessels angeordneten, in Benutzungsstellung vertikalen Ständer aufweist, der an seinem unteren und oberen Ende je ein Schwenkgelenk mit einer horizontalen, parallel zur Sitzflächenvorderkante ausgerichteten Achse umfaßt und dessen oberes Schwenkgelenk mit einem Klappgelenk verbunden ist, das eine in Benutzungsstellung horizontale, zu den Achsen der Schwenkgelenke rechtwinklige Klappachse aufweist und als Anlenkung für wenigstens ein Tischelement dient.

Der Klapptisch ist einfach aufgebaut und leicht zu handhaben. Weiterhin kann er einfach und vor allem nachträglich montiert werden.

Das Gestell kann man mit der Unterkonstruktion des Sessels verbinden. Der Ständer wird dabei seitlich neben der Sitzfläche angeordnet, und zwar entweder in der Benutzungsstellung mit vertikaler Ausrichtung oder in der Bereitschaftsstellung mit horizontaler Ausrichtung. In beiden Stellungen behindert er eine auf dem Sessel sitzende Person nicht. In der Bereitschaftsstellung kann der Klapptisch zusammen mit dem Ständer so angeordnet werden, daß beide Teile niveaumäßig im wesentlichen unterhalb der Sitzfläche verschwinden.

Die beiden Schwenkgelenke ermöglichen zusammen mit dem Klappelement das Überführen der Tischelemente aus der Bereitschaftsstellung in die Benutzungsstellung. Das untere Schwenkgelenk dient dabei zum vertikalen Ausrichten des Ständers, während das obere Schwenkgelenk für das Umklappen der Tischelemente von der einen Seite des Ständers auf die andere vorgesehen ist. Durch dieses Umklappen wird der Ständer einseitig, nämlich von der Sessellehne weg belastet. Er kann in dieser Position auf einfache Weise durch einen Anschlag im unteren Schwenkgelenk stabilisiert werden, ohne daß zusätzliche Feststelleinrichtungen vonnöten wären. Die derart umgeklappten Tischelemente sind auch beim schnellen Abbremsen des Fahrzeuges gesichert, da sie, vom Schwenkgelenk her gesehen, in Fahrtrichtung orientiert sind.

Das Klappgelenk ermöglicht es, das oder die Tischelemente waagrecht umzuklappen, so daß sich für den Benutzer eine waagrechte Auflage ergibt.

Der Klapptisch nimmt immer die gleiche Position zum eigentlichen Sessel des Benutzers ein. Er ist unabhängig von der Stellung und den Bewegungen des Vordersessels. Er kann auch in der ersten Sitzreihe eingesetzt werden, da er unmittelbar mit dem eigentlichen Sessel kombiniert ist.

Sein Gestell ist sehr einfach, da lediglich ein Ständer als Verbindung zwischen dem Tischelement und der Unterkonstruktion des Sessels notwendig ist. Auch bei einer Zwillingsanordnung von Sesseln genügt ein Ständer, der dann ggf. die Tischelemente für beide Sessel trägt. Unabhängig, ob der Klapptisch für einen Einzel- oder Doppelsessel vorgesehen ist, befindet sich der Ständer neben der Sitzfläche, bei Doppelsessel in dem Zwischenraum zwischen den Sitzflächen. Der Klapptisch nutzt damit einen toten Raum vorteilhaft aus. Er läßt die bislang vom Klapptisch beanspruchte Rückenlehne frei und ermöglicht es, sonst dort vorgesehene Anbauteile, wie z. B. Aschenbecher, Haltegriff, Gepäcknetz usw. sinnvoller und praktischer zu gestalten.

Eine vorteilhafte Weiterbildung der Erfindung besteht darin, daß das untere Schwenkgelenk für die vertikale und/oder horizontale Anordnung des Ständers einen Anschlag aufweist. Der Anschlag ermöglicht eine einfache Beschränkung des Schwenkbereiches.

Um das Tischelement in der Bereitschaftsstellung möglichst vollständig neben dem Sitz des Sessels unterbringen zu können und dennoch in der Benutzungsstellung einen Freiraum für den sitzenden Benutzer bereitzustellen ist es günstig, wenn das untere Schwenkgelenk nahe der Sitzflächenvorderkante angeordnet ist.

Im Hinblick auf das Umklappen des oder der Tischelemente aus der Bereitschaftsstellung in die Benutzungsstellung ist es vorteilhaft, wenn das obere Schwenkgelenk einen freien Schwenkbereich von etwa 180° aufweist, der in Benutzungsstellung des Ständers zu beiden Seiten desselben eine horizontale Ausrichtung der Klappachse ermöglicht. Der Schwenkbereich kann einerseits durch die

5 0134919

Tischelemente selbst, andererseits durch Anschläge begrenzt werden, die am Schwenkgelenk selbst oder am Ständer angeordnet werden können.

Im Hinblick auf die Stabilisierung des Ständers in Benutzungsstellung ist es günstig, wenn das Klappgelenk bei Benutzungsstellung von der Sessellehne weggeklappt ist. Der Ständer wird auf diese Weise asymmetrisch durch die Tischelemente belastet und bleibt von selbst in Anlage an einem die vertikale Stellung begrenzenden Anschlag.

Legt man das Klappgelenk so aus, daß sein Durchmesser in etwa der Gesamtstärke zweier aufeinander angeordneter Tischelemente entspricht, so ergibt sich bei zusammengelegten Tischelementen bis hin zum Kippgelenk eine einheitliche Dicke. Für die Lagerung der Tischelemente bietet es sich an, das Klappgelenk scharnierartig auszubilden und durch entsprechende komplementäre Gestaltung der Scharnierlager dafür zu sorgen, daß trotz des Scharniergelenkes die Tischelemente ohne Zwischenraum aneinandergeklappt werden können.

Dabei ist es auch günstig, wenn das Klappgelenk so gestaltet wird, daß bei einer Zwillingsanordnung der Tischelemente beide Elemente gemeinsam auf je einer Seite angeordnet werden können. Es wird dadurch auch bei Zwillingssesseln einer Person ermöglicht, nur für sich den Klapptisch zu benutzen, während die andere, in dem anderen Sessel sitzende Person,kein Tischelemente vor sich hat.

Diesbezüglich ist es auch von Vorteil, wenn die Tischelemente im Hinblick auf die Klappachse spiegelbildlich ausgebildet sind. Sie lassen sich dann deckungsgleich aufeinanderlegen. Besitzen die Tischelemente Öffnungen zur Aufnahme von Getränkegefäßen, so legen sich bei spiegelbildlicher Ausbildung die Öffnungen aufeinander und ermöglichen trotz der doppelten Anordnung der Tischelemente das Einhängen eines Gefäßes.

Nachfolgend wird ein Ausführungsbeispiel anhand einer Zeichnung beschrieben.

Es zeigen:

Figur 1     eine Seitenansicht des Klapptisches, bei der der Tisch mit durchgezogenen Linien in seiner Benutzungsstellung und mit Strichpunktlinien in seiner Bereitschaftsstellung bzw. in einer Zwischenstellung vor dem Umklappen der Tischelemente in die Benutzungsstellung zu sehen ist,

Figur 2     eine Vorderansicht des Klapptisches von Figur 1 und

Figur 3     eine Draufsicht auf den Klapptisch von Figur 1.

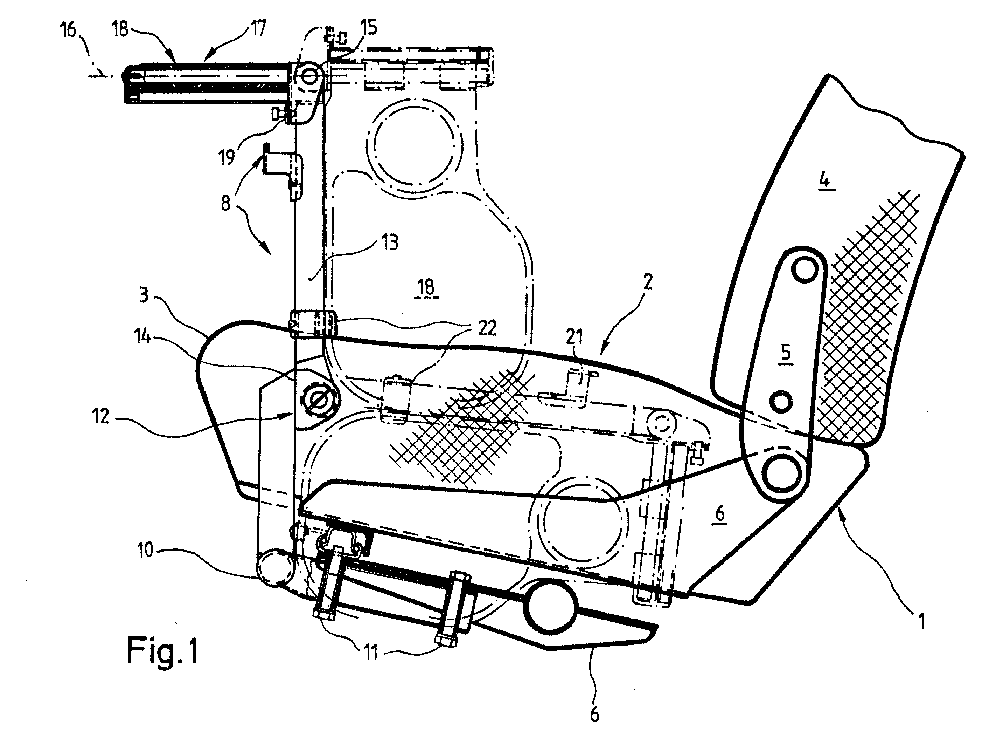

In Figur 1 ist der rechte Sessel 1 eines Zwillingssessels dargestellt. Es handelt sich dabei um einen Omnibussessel, der eine Sitzfläche 2 mit einer Vorderkante 3 und eine Lehne 4 aufweist. Die Lehne ist mit Hilfe eines Beschlages 5 neigbar an der Unterkonstruktion 6 des Sessels befestigt.

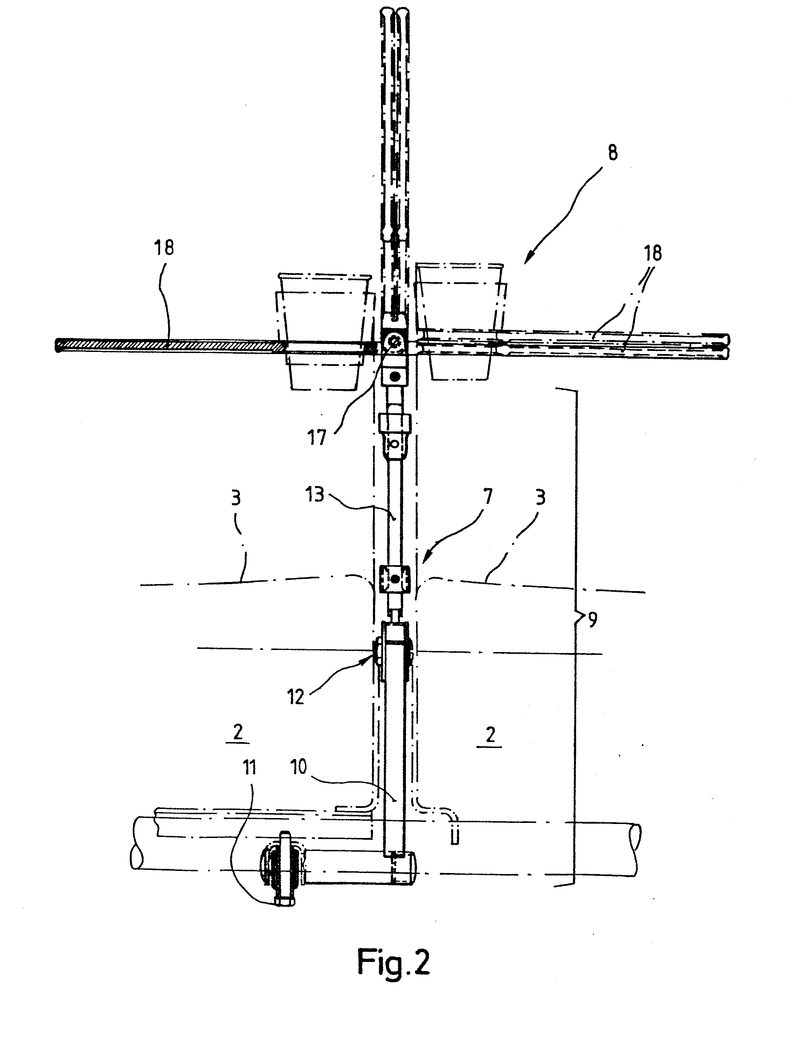

Figur 2 kann entnommen werden, daß in einem Spalt 7 zwischen den Sitzflächen 2 der Zwillingssessel ein Klapptisch 8 angeordnet ist. Er ist mit einem Gestell 9 an der Unterkonstruktion 6 des einen Sessels, im vorliegenden Fall in Benutzungsrichtung gesehen rechten Zwillingssessel, montiert. Eine Zusammenschau der Figuren 1 und 2 ergibt, daß ein im Querschnitt L-förmiger Flanschträger 10 unter die Unterkonstruktion 6 des rechten Sessels hineinragt und dort mit Hilfe zweier Schrauben 11 angeschraubt ist.

Am oberen Ende eines vertikalen Schenkels des Flanschträgers 10 ist ein Schwenkgelenk 12 angeordnet, das die Verbindung herstellt zu einem in Benutzungsstellung vertikalen Ständer 13 des Gestells 9. Das Schwenkgelenk befindet sich nahe der Vorderkante 3 der Sitzfläche 2. Der Flanschträger ist an seinem oberen Ende als Anschlag 14 ausgebildet, um den Schwenkbereich des Ständers 13 in Benutzungsstellung des Klapptisches in seiner vertikalen Ausrichtung zu begrenzen. Der Ständer kann infolgedessen nicht weiter zur Vorderkante 3 der Sitzfläche hin geneigt werden. Er kann jedoch nach rückwärts so weit umgelegt werden, daß er in der Bereitschaftsstellung im wesentlichen horizontal zu liegen kommt und dabei in später noch zu erläuternden Weise zusammen mit dem oder den Tischelementen neben und/oder niveaumäßig unter der Sitzfläche 2 des Sessels 1 angeordnet ist.

Das Schwenkgelenk 12 weist eine horizontale, zur Vorderkante 3 parallele Schwenkachse auf. Am oberen Ende des Ständers 13 ist ein weiteres Schwenkgelenk 15 vorhanden, das gleichermaßen eine horizontale Schwenkachse besitzt, die zur Vorderkante 3 parallel verläuft. Während das untere Schwenkgelenk im wesentlichen einen Schwenkbereich von 90° aufweist, besitzt das obere Schwenkgelenk 15 einen solchen von zirka 180°. Bei dem in vertikaler Benutzungsstellung befindlichen Ständer erstreckt sich der Schwenkbereich in etwa symmetrisch zur Ständerachse nach links und rechts, so daß beidseitig in etwa eine horizontale Ausrichtung einer nachstehend noch zu erläuternden Klappachse 16 möglich ist.

Die Klappachse gehört zu einem scharnierartigen Klappgelenk 17, über das im vorliegenden Fall zwei Tischelemente 18 miteinander verbunden sind. Der Durchmesser des Klappgelenks entspricht in etwa der Gesamtstärke zweier parallel zueinander angeordneter Tischelemente 18. Die Lagerbuchsen des Klappgelenks sind so abgekröpft , daß bei aufeinanderliegenden Tischelementen die Achse 16 des Klappgelenks in der Berührungsebene der beiden Tischelemente verläuft. Auf diese Weise ist es möglich, die Tischelemente sowohl in der Bereitschaftsstellung als auch in der Benutzungsstellung eng aneinanderliegend zu verwenden und sie beispielsweise gemeinsam auf der Seite eines Sessels zu benutzen, während der andere Sessel vom Klapptisch frei ist.

Im vorliegenden Fall sind die Tischelemente bezüglich der Achse 16 spiegelbildlich. Sie umfassen eine von einem Rand eingerahmte Tischfläche 19, sowie kreisrunde Öffnungen 20 für die Aufnahme von Gefäßen, beispielsweise Pappbechern.

Figur 2 kann entnommen werden, daß bei der Anordnung zweier Tischelemente übereinander die Öffnungen aufgrund der Spiegelbildlichkeit und der gewählten Ausgestaltung des Klappgelenks 17 so aufeinanderliegen, daß ein Gefäß in beide fluchtenden Öffnungen eingesetzt werden kann.

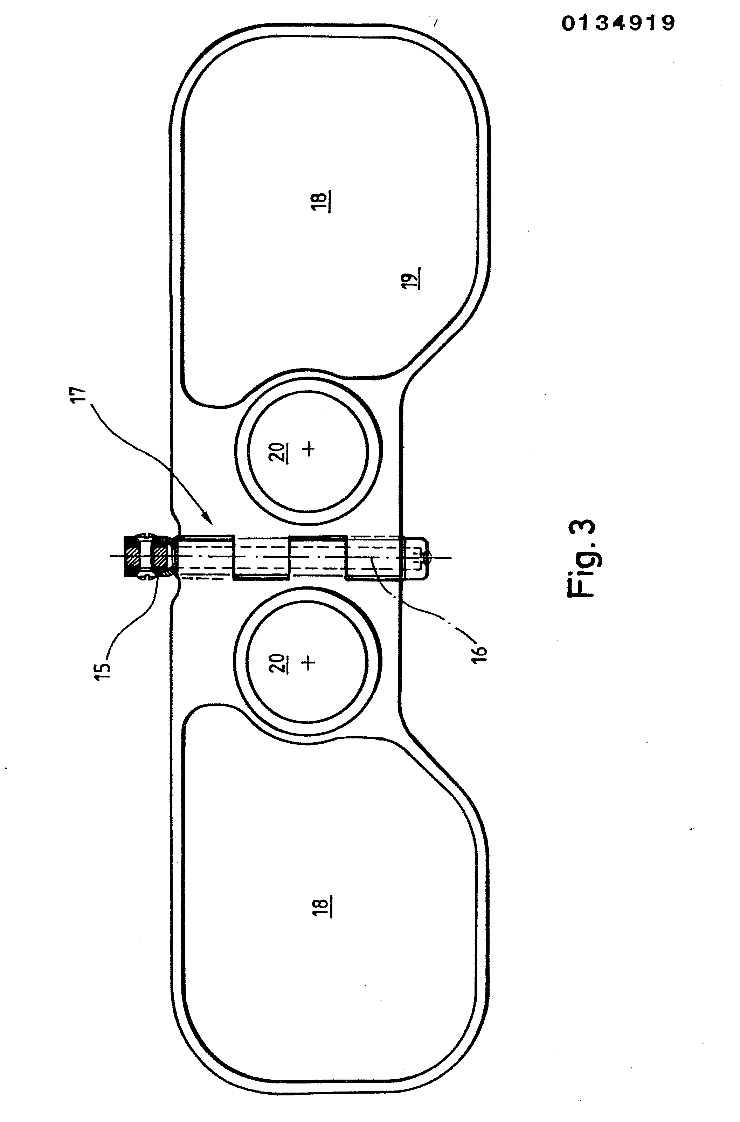

Figur 3 zeigt die Umrißgestaltung der Tischelemente.
Sie ist im wesentlichen rechteckig, wobei die längeren
Rechteckseiten senkrecht auf der Achse 16 stehen. Im
Achsenbereich sind die Tischelemente etwas eingeschnürt.
Dort sind jeweils die Gefäßöffnungen 20 vorgesehen. Die
Einschnürung hat ihren Grund in der Unterkonstruktion
der Sessel. Befinden sich die Tischelemente in ihrer
in Figur 1 gestrichelten Bereitschaftsstellung, so
läuft unterhalb des Einschnürungsbereiches ein Querträger der Unterkonstruktion hindurch. Der Ständer reicht
dabei bis kurz vor den Lehnenbeschlag.

Aus Figur 1 ist ersichtlich, daß in Benutzungsstellung
die Klappachse 16 horizontal ausgerichtet ist. Sie verläuft rechtwinklig zu den Schwenkachsen der Schwenkgelenke 12 und 15. Der gleichen Figur kann auch entnommen werden, daß in Benutzungsstellung die Tischelemente 18 zusammen mit dem Klappgelenk 17 um die Achse des
Schwenkgelenks 15 von der Lehne 4 nach vorne geklappt
sind. Ein mit Hilfe einer Feststellschraube veränderlicher Anschlag 19 des Gelenks 15 wirkt auf den Ständer 13 und hält
die Klapptische in der gewünschten horizontalen Anordnung. Er belastet den Ständer 13 einseitig und zwingt
ihn damit im Bereich des Schwenkgelenks 20 in Anlage
an den Anschlag 14. Beim Bremsen eines mit dem gezeigten Sessel ausgestatteten Fahrzeuges sind die Klapptische stabilisiert, d. h. sie werden nicht verschwenkt.

Der erfindungsgemäße Klapptisch ist einfach aufgebaut
und zu handhaben. Geht man davon aus, daß er sich zunächst in der in Figur 1 dargestellten Bereitschaftsstellung unterhalb des Niveaus der Sitzfläche 2 befindet, so kann der Benutzer durch Angreifen an eine
Handhabe 21 den Klapptisch um die Achse 12 des Schwenkgelenkes nach oben in die gestrichelt gezeigte Zwischenstellung verschwenken. War der Ständer zunächst in etwa  horizontal angeordnet, so befindet er sich jetzt
nach Anlaufen an den Anschlag 14 in vertikaler Ausrichtung. Die noch parallel aneinanderliegenden Klapptische
18 können jetzt um die Achse des oberen Schwenkgelenks
15 nach vorne in die in Figur 1 mit durchgezogenen Linien gezeigte Position geschwenkt werden. Anschließend
ist es möglich, die immer noch parallel zueinander liegenden Klapptische spiegelbildlich aufzuklappen und für
beide benachbarten Sessel nutzbar zu machen. Diese Möglichkeit ist in Figur 2 dargestellt. Gleichfalls ist
dort in der rechten Hälfte der Zeichnung dargestellt,
wie beide Klapptische gemeinsam auf einer Seite benutzt
werden können.

Das Verstauen des Klapptisches vollzieht sich mit den
umgekehrten Handgriffen. In der Bereitschaftsstellung
können die Tischelemente am Ständer durch eine Rastklammer 22 festgelegt werden.

Die Handhabe 21 ist zugleich als Griffring und Haken
ausgebildet. Bei in Benutzungsstellung befindlichem
Klapptisch kann an dem Haken entweder eine Handtasche
oder beispielsweise Abfallbeutel aufgehängt werden.

P A T E N T A N S P R Ü C H E

1. Klapptisch für Fahrzeugsessel, insbesondere Omnibussessel mit einem am Sessel angelenkten Gestell zum Positionieren des Tisches in einer Bereitschafts- oder Benutzungsstellung, dadurch   g e k e n n z e i c h n e t,
daß das Gestell (9) einen seitlich neben der Sitzfläche
(2) des Sessels (1) angeordneten, in Benutzungsstellung
vertikalen Ständer aufweist, der an seinem unteren und
oberen Ende je ein Schwenkgelenk (12, 15) mit einer horizontalen, parallel zur Sitzflächevorderkante (3) ausgerichteten Achse umfaßt und dessen oberes Schwenkgelenk
(15) mit einem Klappgelenk (17) verbunden ist, das eine in Benutzungsstellung horizontale, zu den Achsen der Schwenkgelenke (12, 15) rechtwinklige Klappachse (16) aufweist und als Anlenkung für wenigstens ein Tischelement (18) dient.

2. Klapptisch für Fahrzeugsessel nach Anspruch 1, dadurch g e k e n n z e i c h n e t , daß der Ständer (13) in Benutzungsstellung im wesentlichen vertikal und in Bereitschaftsstellung im wesentlichen neben und/oder niveaumäßig unter der Sitzfläche (2) angeordnet ist.

3. Klapptisch für Fahrzeugsessel nach Anspruch 1 oder 2, dadurch g e k e n n z e i c h n e t , daß das untere Schwenkgelenk (12) für die vertikale und/oder horizontale Anordnung des Ständers (13) einen Anschlag (14) aufweist.

4. Klapptisch für Fahrzeugsessel nach wenigstens einem der Ansprüche 1 bis 3, dadurch g e k e n n z e i c h - n e t , daß das untere Schwenkgelenk (12) nahe der Sitzflächenvorderkante (3) angeordnet ist.

5. Klapptisch für Fahrzeugsessel nach wenigstens einem der Ansprüche 1 bis 4, dadurch g e k e n n z e i c h - n e t , daß der Ständer (13) eine Handhabe (21) zum Verschwenken des Klapptisches (18) aus der Bereitschaftsin die Benutzungsstellung aufweist.

6. Klapptisch für Fahrzeugsessel nach wenigstens einem der Ansprüche 1 bis 5, dadurch g e k e n n z e i c h - n e t , daß das obere Schwenkgelenk (15) einen freien Schwenkbereich von etwa 180° aufweist, der in Benutzungsstellung des Ständers (13) zu beiden Seiten desselben eine horizontale Ausrichtung der Klappachse (16) ermöglicht.

7. Klapptisch für Fahrzeugsessel nach Anspruch 6, dadurch g e k e n n z e i c h n e t , daß das Klappgelenk (17) bei Benutzungsstellung von der Sessellehne (4) weggeklappt ist.

8. Klapptisch für Fahrzeugsessel nach wenigstens einem der Ansprüche 1 bis 7, dadurch g e k e n n z e i c h - n e t , daß bei Zwillingssesseln der Ständer (13) zwischen den beiden Sesseln (1) angeordnet ist und das Klappgelenk (17) zwei Tischelemente (18) trägt.

9. Klapptisch für Fahrzeugsessel nach Anspruch 8, dadurch g e k e n n z e i c h n e t , daß der Durchmesser des Klappgelenks (17) der Gesamtstärke zweier parallel zueinander angeordneter Tischelemente (18) entspricht.

10. Klapptisch für Fahrzeugsessel nach Anspruch 8 oder 9, dadurch g e k e n n z e i c h n e t , daß das Klappgelenk (17) derartig abgekröpfte Lagerbuchsen aufweist, daß bei Übereinanderlagerung zweier Tischelemente (18) die Klappachse (16) in der Berührungsebene der beiden Tischelemente verläuft.

11. Klapptisch für Fahrzeugsessel nach wenigstens einem der Ansprüche 1 bis 10, dadurch g e k e n n z e i c h n e t , daß die Tischelemente (18) bezüglich der Klappachse (16) spiegelbildlich ausgebildet sind.

Fig.1

Fig.2

Fig. 3

EP 1824

0134919